# EUROPEAN PATENT SPECIFICATION

(11) **EP 3 709 246 B1**
(45) Date of publication and mention of the grant of the patent: **19.02.2025**
(21) Application number: 18898922.2
(22) Date of filing: 28.12.2018
(51) Int. Cl.: G06Q 20/20, G06Q 20/22, G06Q 20/34, G06Q 20/38, G07F 7/08, G06Q 20/32

(54) **ELECTRONIC TRANSACTION METHOD AND TERMINAL**
VERFAHREN UND ENDGERÄT FÜR ELEKTRONISCHE TRANSAKTION
PROCÉDÉ ET TERMINAL DE TRANSACTION ÉLECTRONIQUE

(30) Priority: 05.01.2018 CN 201810011564
(43) Date of publication of application: 16.09.2020
(73) Proprietor: HUAWEI TECHNOLOGIES CO., LTD., Shenzhen, Guangdong 518129 (CN)
(72) Inventor: YUAN, Feifan, Shenzhen, Guangdong 518129 (CN)
(74) Representative: Epping - Hermann - Fischer
(86) International application number: PCT/CN2018/124869
(87) International publication number: WO 2019/134591

(56) References cited:
- WO-A1-2015/184353
- CN-A- 101 763 688
- CN-A- 106 022 759
- CN-A- 106 056 382
- CN-A- 107 066 863
- CN-A- 107 403 312
- US-A1- 2012 197 740
- US-A1- 2013 268 123
- US-A1- 2014 122 331

## Description

### TECHNICAL FIELD

This application relates to the field of communications technologies, and in particular, to an electronic transaction method and a terminal.

### BACKGROUND

With development of a near field communication (Near Field Communication, NFC) technology, an e-wallet on a mobile phone is widely applied in fields such as banking, public transit, and rail transit due to features such as security, portability, and wear resistance. Therefore, in an e-wallet of a user, there are usually a plurality of types of cards, for example, a transportation card and a bank card. However, in actual application, the user usually may first select a corresponding card before making a transaction. Alternatively, the user uses a default card to make a transaction, and after the transaction fails, the user selects a correct card to make a transaction. Such a transaction manner brings inconvenience to the user and affects user experience.

Document US 2012/197740 A1 discloses a mobile phone, which comprises a memory including payment information stored therein about a plurality of payment vehicles.

Document WO 2015/184353 A1 refers to a method, wherein an electronic device comprising credit card information. These credit card information can be used to pay at a POS terminal. Document US 2014/122331 A1 discloses method for providing a security code of an electronic stored value card.

Document US 2013/268123 A1 discloses a method for managing the dialogue between an item of equipment and at least one multi-application object.

### SUMMARY

This application provides an electronic transaction method and a terminal, and the electronic transaction method is applied to a mobile terminal. The mobile terminal includes at least two different types of transaction account information, so that the mobile terminal can automatically select, based on type information of an electronic device, a transaction account corresponding to the type information of the electronic device, and transact with the electronic device by using the transaction account. In this way, a user operation is simplified and user experience is improved.

The present invention is defined by the attached set of claims. According to a first aspect, this application provides an electronic transaction method, applied to a mobile terminal, wherein the mobile terminal comprises at least two different types of transaction account information, the transaction account information comprises a bank card and a transportation card, and the method comprises: establishing, by a mobile terminal, a near field communication connection to a transportation POS terminal when the screen of the mobile terminal is off ; receiving, by the mobile terminal, a request message sent by the transportation POS terminal through near field communication, wherein the request message is a request message command type A in the Near Field Communication, NFC, protocol and a flag bit in the request message is re-encoded so that the request message comprises type information of the transportation POS terminal, wherein different codes correspond to different types of POS terminals ; and obtaining, by the mobile terminal, the type information of the transportation POS terminal from the request message, and determining, from the at least two different types of transaction account information based on the type information of the transportation POS terminal, transaction account information corresponding to the type information of the transportation POS terminal to achieve a transaction with the transportation POS terminal.

The request message may be a request command type A (Request Command Type A, REQA) in the NFC protocol, and the REQA is used to carry a type identifier of the POS terminal. Specifically, in this application, POS terminal in different industries may be distinguished by using different codes in the REQA.

The type information of the POS terminal includes the type identifier of the POS terminal, and is used to indicate an industry to which the POS terminal belongs. Industries to which such POS terminals belong include but are not limited to transportation, banking, merchant membership, medicine, a government agency, door control, and the like. An identifier may also be referred to as a type identifier of the POS terminal, an industry identifier of the POS terminal This is not limited in this embodiment of this application.

It can be learned from the foregoing that, according to the e-wallet transaction method provided in this application, a user does not need to manually select a transaction account, and the mobile phone can obtain the type information of the POS terminal based on the request message sent by the POS terminal, and further automatically select, based on the type information, a corresponding transaction account to make a transaction. In this way, a procedure in which the mobile terminal makes an electronic transaction by using an e-wallet application is simplified, and user experience is improved.

In some embodiments, before the mobile terminal activates the transaction account, a card emulation function of the mobile terminal may be enabled. The card emulation function is a working mode in an NFC communication function. After the mode is enabled, the mobile terminal may emulate a physical card to transact with the POS terminal. To be specific, after the card emulation function is enabled in NFC, the POS terminal may directly make an electronic transaction with an embedded secure element.

In some embodiments, before activating a bank transaction account, the mobile terminal prompts the user to input a fingerprint. After receiving the fingerprint input by the user, the mobile terminal verifies the fingerprint. If the verification succeeds, it indicates that the user can use the bank transaction account on the mobile terminal to make a card swiping transaction. If the verification fails, it indicates that the user has no right to use the bank transaction account of the mobile terminal to make a transaction.

According to a second aspect, this application provides a mobile terminal, including at least two different types of transaction account information. The mobile terminal further includes a communications unit, configured to establish a near field communication connection to an electronic device, where the communications unit is further configured to receive a request message sent by the electronic device through near field communication, where the request message includes type information of the electronic device; and a processing unit, configured to: obtain the type information of the electronic device from the request message received by the communications unit, and determine, from the at least two different types of transaction account information based on the type information of the electronic device, transaction account information corresponding to the type information.

In a possible design, the transaction account information includes bank account information, transportation account information, or online payment information.

In a possible design, the processing unit is further configured to: obtain an identifier of a transaction account corresponding to the type information of the electronic device, and determine the transaction account information corresponding to the identifier of the transaction account.

In a possible design, the processing unit is further configured to activate the transaction account corresponding to the determined transaction account information.

In a possible design, the mobile terminal is further configured to: determine whether the transaction account corresponding to the determined transaction account information is a bank account; and if the transaction account corresponding to the determined transaction account information is the bank account, prompt a user to input verification information.

In a possible design, the communications unit is further configured to receive the verification information input by the user, and the communications unit is further configured to verify the verification information, where the verification succeeds.

In a possible design, the communications unit is further configured to transact with the electronic device through near field communication by using the determined transaction account information. According to a third aspect, this application provides a mobile terminal, including a processor, a memory, and a touchscreen, where the memory and the touchscreen are coupled to the processor, the memory is configured to store computer program code, the computer program code includes computer instruction, and when the processor executes the computer instruction stored in the memory, the mobile terminal performs the electronic transaction method in any possible implementation of the first aspect.

According to a fourth aspect, a computer storage medium is provided, including a computer instruction. When the computer instruction is run on a mobile terminal, the mobile terminal is enabled to perform the electronic transaction method in any possible implementation of the first aspect.

According to a fifth aspect, a computer program product is provided, and when the computer program product is run on a computer, the computer is enabled to perform the electronic transaction method in any possible implementation of the first aspect.

### BRIEF DESCRIPTION OF DRAWINGS

FIG. 1 is a schematic structural diagram of a communications network according to this application;
FIG. 2 is a schematic structural diagram 1 of a mobile terminal according to this application;
FIG. 3 is a schematic structural diagram of an electronic device according to this application;
FIG. 4(1) to FIG. 4(3) are a schematic diagram of a process in which a mobile terminal makes a transaction by using a transportation account in the prior art;
FIG. 5(1) and FIG. 5(2) are a schematic diagram of a process in which a mobile terminal makes a transaction by using a transportation account according to this application;
FIG. 6(1) to FIG. 6(3) are a schematic diagram of a process in which a mobile terminal makes a transaction by using a bank account according to this application;
FIG. 7(1) and FIG. 7(2) are a schematic diagram of an example of a terminal interface according to this application;
FIG. 8 is a schematic structural diagram 2 of a mobile terminal according to this application;
FIG. 9 is a schematic structural diagram 3 of a mobile terminal according to this application; and
FIG. 10 is a schematic structural diagram 4 of a mobile terminal according to this application.

### DESCRIPTION OF EMBODIMENTS

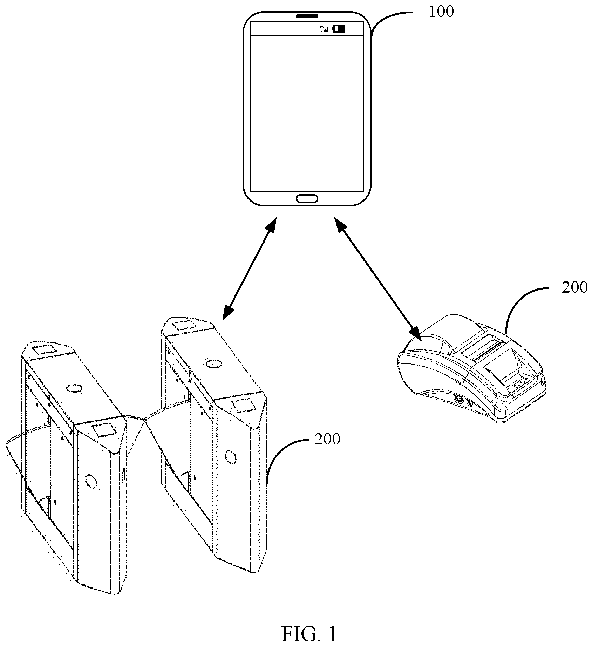

FIG. 1 shows a communications system according to an embodiment of this application. The communications system includes a mobile terminal 100 and an electronic device 200.

The mobile terminal 100 may be a mobile phone, a tablet computer, a personal computer (Personal Computer, PC), a personal digital assistant (personal digital assistant, PDA), a smartwatch, a netbook, a wearable electronic device, an augmented reality (Augmented Reality, AR) technology device, a virtual reality (Virtual Reality, VR) device, or the like on which an application can be installed and an application icon is displayed. A specific form of the mobile terminal 100 is not specifically limited in this application.

In this embodiment of this application, an application of an e-wallet is installed on the mobile terminal 100. In this way, a user can directly use the mobile phone to make an electronic transaction based on a transportation account, a bank account, or the like, so as to implement card swiping consumption.

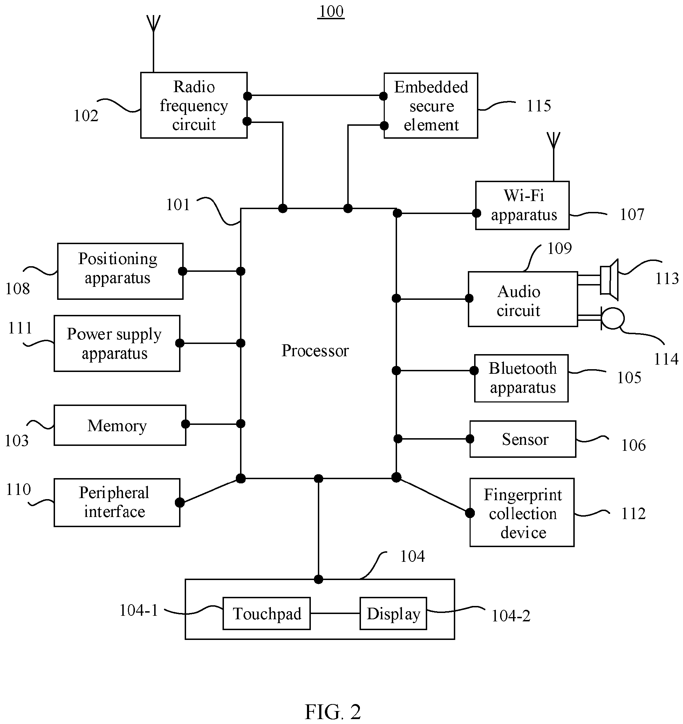

As shown in FIG. 2, for example, a mobile phone is used as the mobile terminal 100. The mobile phone may specifically include components such as a processor 101, a radio frequency (Radio Frequency, RF) circuit 102, a memory 103, a touchscreen 104, a Bluetooth apparatus 105, one or more sensors 106, a wireless fidelity (Wireless Fidelity, Wi-Fi) apparatus 107, a positioning apparatus 108, an audio circuit 109, a peripheral interface 110, and a power supply apparatus 111. These components may perform communication by using one or more communications buses or signal lines (not shown in FIG. 2). A person skilled in the art may understand that a hardware structure shown in FIG. 2 does not constitute a limitation on the mobile phone, and the mobile phone may include more or fewer components than those shown in the figure, or combine some components, or have a different component arrangement.

The following describes the components of the mobile phone in detail with reference to FIG. 2.

The processor 101 is a control center of the mobile phone; is connected to components of the mobile phone by using various interfaces and lines; and runs or executes an application stored in the memory 103 and invokes data stored in the memory 103, to perform various functions and data processing of the mobile phone. In some embodiments, the processor 101 may include one or more processing units. For example, the processor 101 may be a Kirin 960 chip manufactured by the Huawei Technologies Co., Ltd. In some embodiments of this application, the processor 101 may further include a fingerprint verification chip, configured to verify a collected fingerprint.

The radio frequency circuit 102 may be configured to receive and send a radio signal in an information receiving and sending process or a call process. Particularly, after receiving downlink data from a base station, the radio frequency circuit 102 may send the downlink data to the processor 101 for processing, and send uplink-related data to the base station. Generally, the radio frequency circuit includes but is not limited to an antenna, at least one amplifier, a transceiver, a coupler, a low noise amplifier, a duplexer, and the like. In addition, the radio frequency circuit 102 may further communicate with another device through wireless communication. The wireless communication may use any communication standard or protocol, including but not limited to global system for mobile communications, general packet radio service, code division multiple access, wideband code division multiple access, long term evolution, email, short message service, and the like.

In this embodiment of this application, the radio frequency circuit 102 is further configured to communicate with the electronic device 200. Used communications protocols include but are not limited to an NFC protocol, Bluetooth, a multiple spanning tree protocol (Multiple Spanning Tree Protocol, MST), and the like.

The memory 103 is configured to store an application and data. The processor 101 runs the application and the data that are stored in the memory 103, to perform various functions and data processing of the mobile phone. The memory 103 mainly includes a program storage area and a data storage area. The program storage area may store an operating system, and an application required by at least one function (for example, a sound playing function or an image playing function). The data storage area may store data (for example, audio data or a phone book) created based on use of the mobile terminal. In addition, the memory 103 may include a high-speed random access memory (Random Access Memory, RAM), and may further include a non-volatile memory such as a magnetic disk storage device, a flash storage device, or another volatile solid-state storage device. The memory 103 may store various operating systems such as an iOS^{®} operating system developed by Apple and an Android^{®} operating system developed by Google. The memory 103 may be independent, and connected to the processor 101 through the communications bus. Alternatively, the memory 103 may be integrated with the processor 101.

The touchscreen 104 may specifically include a touchpad 104-1 and a display 104-2.

The touchpad 104-1 may collect a touch event performed by a user of the mobile phone on or near the touchpad 104-1 (for example, an operation performed by the user on or near the touchpad 104-1 by using any proper object such as a finger or a stylus), and send collected touch information to another component (for example, the processor 101). The touch event performed by the user near the touchpad 104-1 may be referred to as a floating touch. The floating touch may mean that the user can perform a required function without directly touching the touchpad for selecting, moving, or dragging an object (for example, an icon), provided that the user is located near the device. In addition, the touchpad 104-1 may be implemented in a plurality of types such as a resistive type, a capacitive type, an infrared type, and a surface acoustic wave type.

The display (also referred to as a display screen) 104-2 may be configured to display information input by the user or information provided for the user, and various menus of the mobile phone. The display 104-2 may be configured in a form of a liquid crystal display, an organic light-emitting diode, or the like. The touchpad 104-1 may cover the display 104-2. After detecting the touch event on or near the touchpad 104-1, the touchpad 104-1 transfers the touch event to the processor 101 to determine a type of the touch event. Then the processor 101 may provide corresponding visual output on the display 104-2 based on the type of the touch event. Although in FIG. 2, the touchpad 104-1 and the display 104-2 are used as two independent components to implement input and output functions of the mobile phone, in some embodiments, the touchpad 104-1 and the display 104-2 may be integrated to implement the input and output functions of the mobile phone. It may be understood that the touchscreen 104 is formed by stacking a plurality of layers of materials. In this embodiment of this application, only the touchpad (layer) and the display (layer) are presented, and another layer is not described in this embodiment of this application. In addition, the touchpad 104-1 may be disposed on a front side of the mobile phone in a full panel form, and the display 104-2 may also be disposed on the front side of the mobile phone in the full panel form. In this way, a bezel-less structure can be implemented on the front side of the mobile phone.

In this embodiment of this application, the mobile phone may further have a fingerprint recognition function. For example, a fingerprint recognizer 112 may be disposed on a back side of the mobile phone (for example, disposed below a rear-facing camera), or a fingerprint recognizer 112 may be disposed on the front side of the mobile phone (for example, disposed below the touchscreen 104). For another example, a fingerprint collection device 112 may be configured in the touchscreen 104 to implement the fingerprint recognition function. That is, the fingerprint collection device 112 may be integrated with the touchscreen 104 to implement the fingerprint recognition function of the mobile phone. In this case, the fingerprint collection device 112 is disposed in the touchscreen 104, and may be a part of the touchscreen 104, or may be disposed in the touchscreen 104 in another manner. A main component of the fingerprint collection device 112 in this embodiment of this application is a fingerprint sensor. The fingerprint sensor may use any type of sensing technology, including but not limited to an optical sensing technology, a capacitive sensing technology, a piezoelectric sensing technology, an ultrasonic sensing technology, and the like.

In this embodiment of this application, the fingerprint recognition function is further used to verify a user identity in a process of making a transaction by using a bank account.

The mobile phone may further include the Bluetooth apparatus 105 configured to exchange data between the mobile phone and another short-range device (for example, a mobile phone or a smartwatch). The Bluetooth apparatus in this embodiment of this application may be an integrated circuit, a Bluetooth chip, or the like.

The mobile phone may further include at least one type of sensor 106, such as a light sensor, a motion sensor, and another sensor. Specifically, the light sensor may include an ambient light sensor and a proximity sensor. The ambient light sensor may adjust luminance of the display of the touchscreen 104 based on brightness of ambient light. The proximity sensor may power off the display when the mobile phone is moved to an ear. As a type of motion sensor, an accelerometer sensor may detect acceleration values in various directions (usually on three axes), and may detect a value and direction of gravity in a static state. The accelerometer sensor may be used for an application for recognizing a mobile phone posture (such as switching between a landscape screen and a vertical screen, a related game, and magnetometer posture calibration), a function related to vibration recognition (such as a pedometer and a knock), and the like. For other sensors that may be further configured in the mobile phone, such as a gyroscope, a barometer, a hygrometer, a thermometer, and an infrared sensor, details are not described herein.

The Wi-Fi apparatus 107 is configured to provide the mobile phone with network access conforming to a Wi-Fi related standard protocol. The mobile phone may access a Wi-Fi access point by using the Wi-Fi apparatus 107, so as to help the user receive and send an email, browse a web page, access streaming media, and the like. The Wi-Fi apparatus 107 provides wireless broadband internet access for the user. In some other embodiments, the Wi-Fi apparatus 107 may alternatively be used as a Wi-Fi wireless access point, to provide Wi-Fi network access for another device.

The positioning apparatus 108 is configured to provide a geographical position for the mobile phone. It may be understood that the positioning apparatus 108 may be specifically a receiver of a positioning system such as a global positioning system (Global Positioning System, GPS), a Beidou navigation satellite system, or a GLONASS of Russia. After receiving the geographical position sent by the positioning system, the positioning apparatus 108 sends the information to the processor 101 for processing, or sends the information to the memory 103 for storage. In some other embodiments, the positioning apparatus 108 may alternatively be a receiver of an assisted global positioning system (Assisted Global Positioning System, AGPS). The AGPS system, serving as an assisted server, assists the positioning apparatus 108 in implementing ranging and a positioning service. In this case, the assisted positioning server communicates with a device such as the positioning apparatus 108 (namely, the receiver of the GPS) of the mobile phone by using a wireless communications network, to provide positioning assistance. In some other embodiments, the positioning apparatus 108 may alternatively be a positioning technology based on a Wi-Fi access point. Because each Wi-Fi access point has a globally unique (Media Access Control, MAC) address, the device may scan and collect a broadcast signal of a surrounding Wi-Fi access point when Wi-Fi is enabled, and therefore may obtain a MAC address broadcasted by the Wi-Fi access point. The device sends, to a location server by using the wireless communications network, such data (for example, the MAC address) that can identify the Wi-Fi access point, and the location server retrieves a geographical location of each Wi-Fi access point, obtains a geographical location of the device through calculation with reference to strength of a Wi-Fi broadcast signal, and sends the geographical location of the device to the positioning apparatus 108 of the device.

The audio circuit 109, a loudspeaker 113, and a microphone 114 may provide an audio interface between the user and the mobile phone. The audio circuit 109 may transmit, to the loudspeaker 113, an electrical signal converted from received audio data, and the loudspeaker 113 converts the electrical signal into a sound signal for outputting. In addition, the microphone 114 converts a collected sound signal into an electrical signal. The audio circuit 109 converts the electrical signal into audio data after receiving the electrical signal, and then outputs the audio data to the RF circuit 102, to send the audio data to, for example, another mobile phone, or outputs the audio data to the memory 103 for further processing.

The peripheral interface 110 is configured to provide various interfaces for an external input/output device (for example, a keyboard, a mouse, an externally connected display, an external memory, or a subscriber identification module card). For example, the mobile phone is connected to the mouse by using a universal serial bus (Universal Serial Bus, USB) interface, and is connected, by using a metal contact on a card slot of the subscriber identification module card, to a subscriber identification module (Subscriber Identification Module, SIM) card provided by a telecommunications operator. The peripheral interface 110 may be configured to couple the external input/output peripheral device to the processor 101 and the memory 103.

In this embodiment of this application, the mobile phone may communicate with another device in a device group through the peripheral interface 110, for example, may receive, through the peripheral interface 110, display data sent by the another device, to display the display data. This is not limited in this embodiment of this application.

The mobile phone may further include the power supply apparatus 111 (for example, a battery and a power management chip) that supplies power to the components. The battery may be logically connected to the processor 101 by using the power management chip, so that functions such as charging, discharging, and power consumption management are implemented by using the power supply apparatus 111.

In this embodiment of this application, the mobile phone further includes an embedded secure element (embedded Secure Element, eSE) 115. The eSE 115 is separately connected to the processor 101 and the radio frequency circuit 102. The eSE 115 is configured to directly transact with the electronic device 200 after the processor 101 selects a corresponding card. The embedded secure element stores a plurality of types of transaction account information bound by the user in an e-wallet. Transaction accounts corresponding to the transaction account information include but are not limited to a bank card, a transportation card, a rail transit card, a recharge card, a point card, a member card, and the like.

Although not shown in FIG. 2, the mobile phone may further include a camera (a front-facing camera and/or a rear-facing camera), a camera flash, a micro projection apparatus, an NFC apparatus, and the like. Details are not described herein.

All methods in the following embodiments may be implemented in a mobile phone having the foregoing hardware structure.

The electronic device 200 may be an electronic device on which an NFC function is used for interaction, for example, a point of sale (Point of Sale, POS) of UnionPay, a turnstile apparatus of a bus, a subway, a ship, or the like, or a member machine of a merchant.

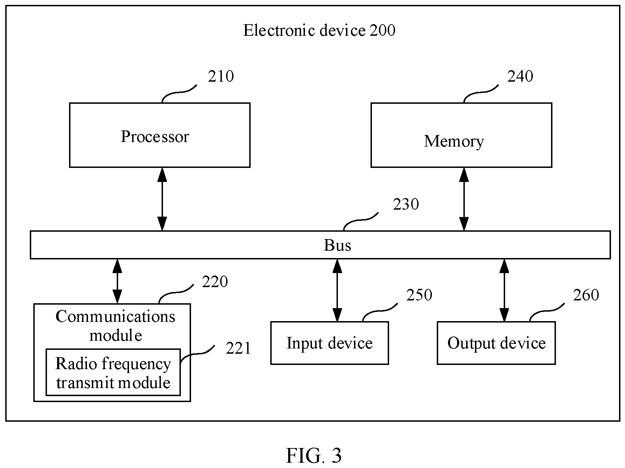

FIG. 3 is a structural diagram of hardware of an electronic device 200 according to an embodiment of this application. The electronic device 200 may include at least one processor 210, at least one communications module 220, and a bus 230. Optionally, a terminal 30 may further include at least one memory 240, an input device 250, and an output device 260.

The processor 210, the memory 240, and the communications module 220 are connected by using the bus 230. The processor 210 may be a general-purpose central processing unit (Central Processing Unit, CPU), a microprocessor, an application-specific integrated circuit (Application-Specific Integrated Circuit, ASIC), or one or more integrated circuits configured to control program execution in the solution of this application. The processor 301 may alternatively include a plurality of CPUs, and the processor 210 may be a single-core (single-CPU) processor or a multicore (multi-CPU) processor. The processor herein may be one or more devices, circuits, and/or processing cores configured to process data (for example, a computer program instruction).

The communications module 220 may be any apparatus of a transceiver type, and is configured to communicate with another device or a communications network such as an Ethernet network, a radio access network (Radio Access Network, RAN), or a wireless local area network (Wireless Local Area Networks, WLAN).

In this embodiment of this application, the communications module 220 includes a radio frequency transmit module 221 configured to send an NFC instruction, communicate with the mobile terminal 100, and the like.

The memory 240 may be a read-only memory (Read-Only Memory, ROM) or another type of static storage device that can store static information and an instruction, or a random access memory (Random Access Memory, RAM) or another type of dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer, but is not limited thereto. The memory 240 may exist independently, and be connected to the processor 210 by using the bus 230. Alternatively, the memory 240 may be integrated with the processor 210. The memory 240 is configured to store application program code for executing the solution in this application, and the processor 210 controls execution of the application program code. The processor 210 is configured to execute the computer program code stored in the memory 240, to implement the e-wallet transaction method in this embodiment of this application.

The input device 250 communicates with the processor 210, and may receive input of a user in a plurality of manners. For example, the input device 250 may be a mouse, a keyboard, a touchscreen device, or a sensor device. The output device 260 communicates with the processor 210, and may display information in a plurality of manners. For example, the output device 260 may be a liquid crystal display (Liquid Crystal Display, LCD), a light emitting diode (Light Emitting Diode, LED) display device, a cathode ray tube (Cathode Ray Tube, CRT) display device, or a projector (projector).

Generally, when a user makes a transaction by using an e-wallet application on a mobile terminal, the user usually first selects a transaction account of a corresponding type, for example, a bank transaction account (for example, a bank card) or a transportation transaction account (for example, a transportation card), before making the transaction. Alternatively, the user uses a default transaction account to make a transaction, and after the transaction fails, the user selects a correct transaction account to make a transaction.

The following provides descriptions with reference to a specific application scenario. An example in which two different types of transaction accounts (for example, a transportation card and a bank card) are bound to the e-wallet of the user is used to describe a process in which the user makes an electronic transaction by using the mobile terminal.

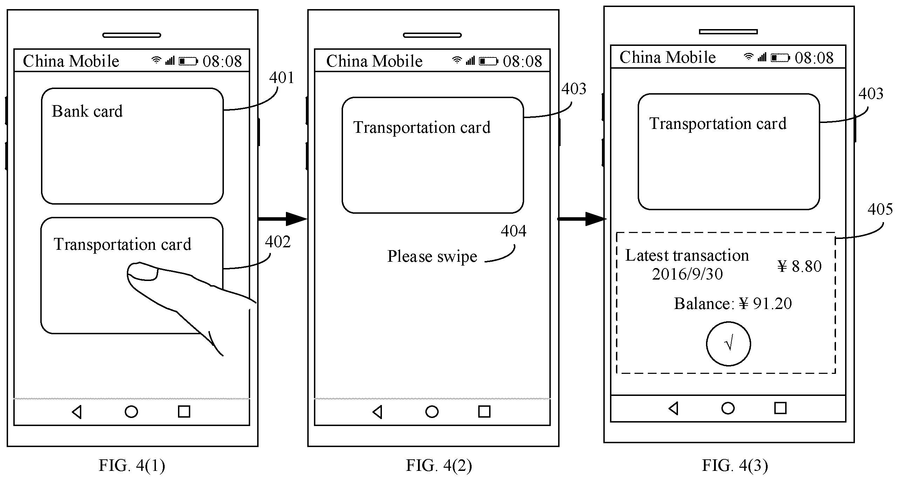

In a case, when the user holds the mobile phone to approach a transportation POS terminal, the mobile phone automatically switches from a screen-off mode to a screen-on mode, and displays an interface shown in FIG. 4(1). The interface includes a bank card thumbnail 401 and a transportation card thumbnail 402 that indicate that the e-wallet application on the mobile phone is bound with account information of the bank card and account information of the transportation card. In response to an operation of selecting the transportation card by the user, for example, an operation of tapping the transportation card thumbnail 402, the mobile phone displays a payment interface of the transportation card, for example, an interface shown in FIG. 4(2). The interface includes a transportation card thumbnail 403 and prompt information 404. The transportation card thumbnail 403 indicates that a transaction account currently used on the mobile terminal is the transportation card, and the prompt information 404 is used to prompt the user to hold the mobile phone to approach the transportation POS terminal to make a transaction. Then, the mobile phone automatically transacts with the transportation POS terminal. After the transaction succeeds, the mobile phone displays a payment success interface, for example, an interface shown in FIG. 4(3). The interface includes the transportation card thumbnail 403 and payment information 405. The payment information 405 is used to notify the user of the payment information of this transaction, including a time, an amount, a balance, and a payment success icon of the latest transaction.

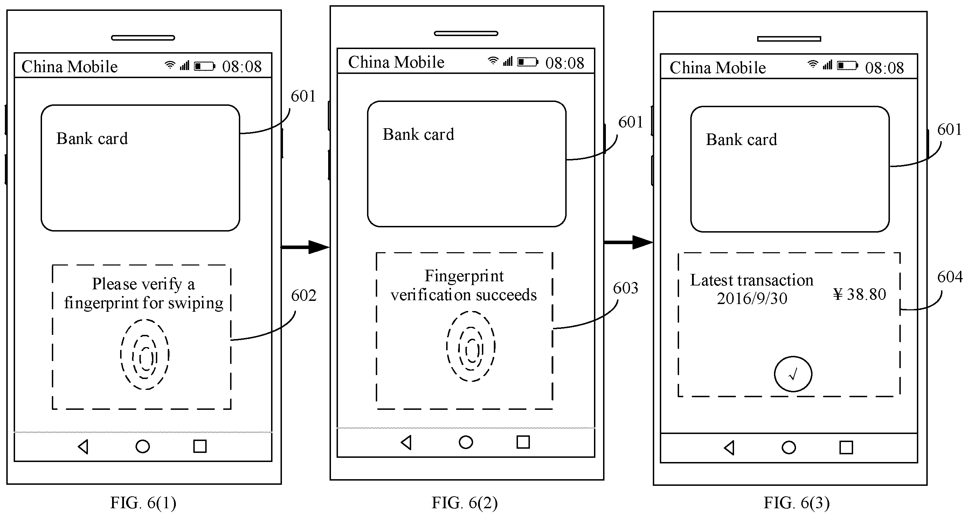

In another case, it is assumed that the bank card is set as the default card on the mobile phone. When the user holds the mobile phone to approach a bus POS terminal, the mobile phone automatically switches from a screen-off mode to a screen-on mode, and displays a payment interface of the bank card, that is, an interface shown in FIG. 6(1). However, this transaction fails because a card type is incorrect. The user may re-enter the interface shown in FIG. 4(1), and reselect the transportation card to make a transaction again.

It can be learned from the foregoing that when there are many types of transaction accounts bound to the e-wallet application, the user needs to remember the types of transaction accounts, and the user needs to select a corresponding transaction account for each transaction. This results in poor user experience. Therefore, an embodiment of this application provides a method for making an electronic transaction by using a mobile terminal, where the mobile phone can automatically identify a type of a POS terminal, and automatically select a transaction account corresponding to the POS. In this way, a step of manually selecting a transaction account by a user can be omitted, and user experience is improved.

In general, after the technical solution provided in this application is used, when the mobile phone of the user approaches the POS terminal, the mobile phone of the user can receive type information of the POS terminal sent by the POS terminal, and the mobile phone may automatically select corresponding transaction account information based on the type information of the POS terminal. Therefore, the mobile phone may not need to display an interface for selecting the transaction account information, but directly display a payment interface corresponding to a determined transaction account, to automatically make a transaction.

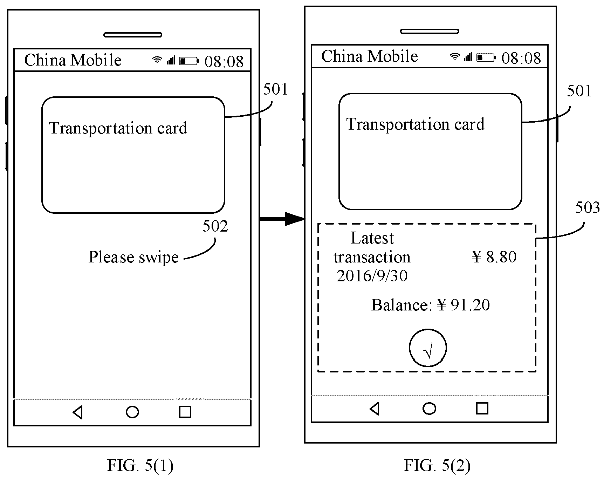

For example, when the user holds the mobile phone to approach a transportation POS terminal, the mobile phone automatically switches from a screen-off mode to a screen-on mode. Because the mobile phone can automatically identify the transportation POS terminal and automatically select account information of a transportation card, the mobile phone directly displays a payment interface of the transportation card, for example, an interface shown in FIG. 5(1). The interface includes a transportation card thumbnail 501 and prompt information 502. The transportation card thumbnail 501 indicates that a transaction account currently used on the mobile terminal is the transportation card, and the prompt information 502 is used to prompt the user to approach the transportation POS terminal for card swiping. Then, the mobile phone automatically transacts with the bus POS. After the transaction succeeds, the mobile phone displays a payment success interface, for example, an interface shown in FIG. 5(2). The interface includes the transportation card thumbnail 501 and payment information 503. The payment information 503 is used to notify the user of the payment information of this transaction, including a time, an amount, a balance, and a payment success icon of the latest transaction.

When the user holds the mobile phone to approach a bank POS terminal, the mobile phone automatically switches from the screen-off mode to the screen-on mode. Because the mobile phone can automatically identify the bank POS terminal and automatically select account information of a bank card, the mobile phone directly displays a payment interface of the bank card, for example, the interface shown in FIG. 6(1). The interface includes a bank card thumbnail 601 and prompt information 602. The bank card thumbnail 601 indicates that a transaction account currently used on the mobile terminal is the bank card, and the prompt information 602 is used to prompt the user to input a fingerprint, so that the mobile phone verifies an identity of the user. After the mobile phone receives the fingerprint input by the user, if the terminal succeeds in the verification, the mobile phone displays an interface shown in FIG. 6(2). The interface includes the bank card thumbnail 601 and prompt information 603. The prompt information 603 is used to notify the user that the fingerprint verification succeeds. Then, the mobile phone automatically transacts with the bank POS terminal. After the transaction succeeds, the mobile phone displays a payment success interface, for example, an interface shown in FIG. 6(3). The interface includes the bank card thumbnail 601 and payment information 604. The payment information 604 is used to notify the user of the payment information of this transaction, including a time, an amount, and a payment success icon of the latest transaction.

It can be learned from the foregoing that, according to the e-wallet transaction method provided in this application, the user does not need to manually select a transaction account, and the mobile phone can automatically select a corresponding transaction account based on the obtained type information of the POS terminal to make a transaction. In this way, an e-wallet transaction procedure is simplified, and user experience is improved.

With reference to the accompanying drawings, the following provides detailed descriptions by using an example in which the technical solution provided in this application is applied to the mobile phone shown in FIG. 1.

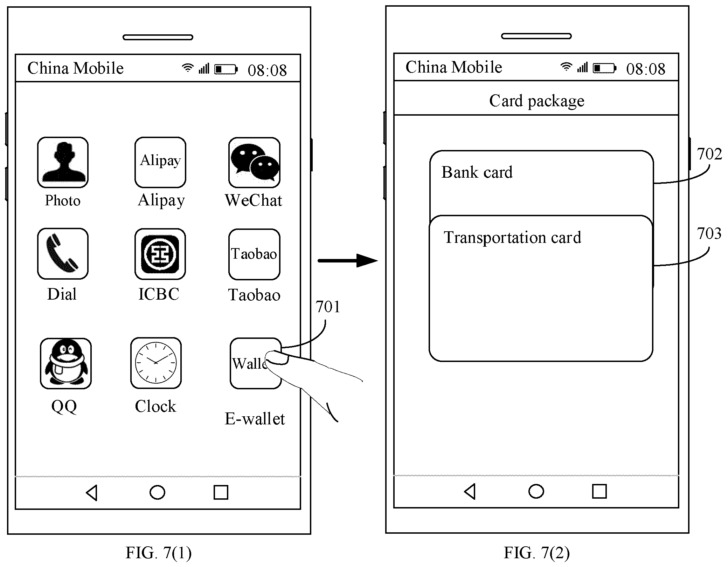

To make the mobile phone implement a transaction between the transportation card and the transportation POS terminal, and make the mobile phone implement a transaction between the bank card and the bank POS terminal, the user binds the transportation card and the bank card to the e-wallet application on the mobile phone in advance. To be specific, the transportation account information and the bank account information are set in the e-wallet. In this way, the mobile phone of the user establishes a near field communication connection to the transportation POS terminal or the bank POS terminal, and further completes an electronic transaction between the mobile phone and the transportation POS terminal or the bank POS terminal. For example, as shown in FIG. 7(1), in response to tapping, by the user, an "e-wallet" icon 701 on a home screen of the mobile phone, the mobile phone displays a card package interface shown in FIG. 7(2). The interface displays a bank card thumbnail 702 and a transportation card thumbnail 703 that indicate that the e-wallet of the mobile phone has been bound with the account information of the bank card and the account information of the transportation card.

A process of the electronic transaction between the mobile phone and the transportation POS terminal or the bank POS terminal specifically includes the following steps.

S101: After the mobile terminal establishes a near field communication connection to an electronic device, when the user holds the mobile phone to approach the electronic device, the mobile phone receives type information of the electronic device sent by the electronic device.

The electronic device may be a transportation POS terminal, a bank POS terminal, or the like. Communications protocols that may be used for the near field communication connection between the mobile terminal and the electronic device include but are not limited to an NFC protocol, Bluetooth, MST, and the like.

Specifically, when being used, a POS terminal having a near field communication function periodically sends a request message, to search for a surrounding terminal that can use near field communication for interaction. For example, the transportation POS terminal periodically sends a request message within a specific time. After a transaction amount is input into the bank POS terminal, the bank POS terminal periodically sends a request message. When the mobile phone approaches such a POS terminal, the mobile phone can receive the request message sent by the POS terminal device. The request message includes type information of the POS terminal. Therefore, the terminal obtains the type information of the POS terminal based on the request message.

The type information of the electronic device may also be referred to as type information of the POS terminal, includes a type identifier of the electronic device, and is used to indicate an industry to which the electronic device belongs. Industries to which such electronic devices belong include but are not limited to transportation, banking, merchant membership, medicine, a government agency, door control, and the like. An identifier of the electronic device may also be referred to as a type identifier of the POS terminal, an industry identifier of the electronic device, an industry identifier of the POS terminal, or the like. This is not limited in this embodiment of this application. For example, the request message periodically sent by the POS terminal may be a request command type A (Request Command Type A, REQA) in the NFC protocol, and the REQA is used to carry the type identifier of the POS terminal. Specifically, in this application, electronic devices in different industries may be distinguished by using different codes in the REQA.

In a possible implementation, an existing flag bit in the REQA may be re-encoded, so that different codes correspond to different types of POS terminals. Table 1 provides an example of re-encoding an existing flag bit in the REQA, as follows:

**Table 1 REQA encoding**

| b7 | b6 | b5 | b4 | b3 | b2 | b1 | Code meaning |
|---|---|---|---|---|---|---|---|
| 0 | 1 | 0 | 0 | 1 | 1 | 0 | "26", identifying a financial industry type |
| 0 | 1 | 0 | 0 | 1 | 1 | 1 | "27", identifying a transportation industry type |

Optionally, in this embodiment of this application, alternatively, "26" may be used to identify the transportation industry type, and in this case, "27" is used to identify the financial industry type. In this application, neither content nor a manner of specific identification is limited, provided that different types of POS terminals can be distinguished.

In another possible implementation, a flag bit of the REQA may be extended, and different codes are used in an extension of the flag bit to correspond to different types of POS terminals. Table 2 provides an example of an extended flag bit of the REQA, as follows:

**Table 2 REQA extension format**

| b15 to b10 | b9 and b8 | b7 | b6 | b5 | b4 | b3 | b2 | b1 |
|---|---|---|---|---|---|---|---|---|
| Reserved | Identify a type of a POS terminal | 0 | 1 | 0 | 0 | 1 | 1 | 0 |

Specifically, eight bits may be added to the REQA, so that original seven bits are extended to 15 bits. Content of the original seven bits remains unchanged, and the extension of the flag bit is used to identify a type of the POS terminal. The added eight bits may be encoded by using an encoding rule of an application family identifier (Application Family Identifier, AFI) shown in Table 3, as follows:

**Table 3 AFI encoding rule table**

| Most significant half byte | Least significant half byte | Meaning | Example/Remark |
|---|---|---|---|
| '0' | '0' | All families and subfamilies | No card preselection |
| 'X' | '0' | All subfamilies of a family X | Extensive card preselection |
| 'X' | 'Y' | Only the Y^{th} subfamily of a family X | |
| '0' | 'Y' | Only a dedicated subfamily Y | |
| '1' | '0', 'Y' | Transportation | Group transportation, automobiles, airlines, and the like |
| '2' | '0', 'Y' | Finance | Banking, retail, and the like. |
| '3' | '0', 'Y' | Identification | Door control and the like. |
| '4' | '0', 'Y' | Telecommunications | Public telephone, mobile phone, and the like. |
| '5' | '0', 'Y' | Medicine | |
| '6' | '0', 'Y' | Multimedia | Internet services and the like |
| '7' | '0', 'Y' | Lottery | |
| '8' | '0', 'Y' | Data Storage | Portable files and the like |
| '9'-'F' | '0', 'Y' | Reserved | |

In Table 3, X ranges from 1 to F, and Y ranges from 1 to F.

Optionally, two of the added eight bits may alternatively be used to identify the type of the POS terminal. For example, the eighth bit and the ninth bit may be used to identify the type of the POS terminal, "00" indicates a transportation industry type, "01" indicates a financial industry type, and the like.

Optionally, in this embodiment of this application, other two or more of the eight extension bits may alternatively be used to identify the type of the POS terminal, or another encoding manner may be used to identify the type of the POS terminal. An identification location, an identification manner, and identification content of the type of the POS terminal are not limited in this application. S102: The mobile phone determines, from a plurality of pieces of transaction account information on the mobile phone based on the type information of the electronic device, transaction account information corresponding to the type information.

For example, the mobile phone further obtains the type identifier of the electronic device from the type information of the electronic device, searches for a transaction account identifier corresponding to the type identifier, and determines a transaction account corresponding to the transaction account identifier. Then, the terminal activates the determined transaction account, and subsequently, may directly transact with the POS terminal by using the transaction account, to implement card swiping consumption.

For example, it is assumed that the POS terminal identifies the type of the POS terminal by using a REQA code shown Table 1. In this case, the mobile phone may determine, based on a correspondence shown in Table 4, a card identifier of a to-be-used-for-transaction card that needs to be activated. Table 4 is as follows:

**Table 4 Correspondence between REQA codes and cards**

| REQA codes | | | | | | | Corresponding cards |
|---|---|---|---|---|---|---|---|
| 0 | 1 | 0 | 0 | 1 | 1 | 0 | Bank Card |
| 0 | 1 | 0 | 0 | 1 | 1 | 1 | Transportation card |

Specifically, if the user holds the mobile phone to approach the transportation POS terminal, the mobile phone automatically switches from the screen-off mode to the screen-on mode, and type information that is of the POS terminal and that is obtained by the mobile phone is a type identifier of a transportation industry. For example, a REQA code is "0100111". In this case, the mobile phone finds, based on the type identifier of the transportation industry, that a transaction account corresponding to the type identifier is a transportation card, and the mobile phone activates the transportation card, and subsequently transacts with the POS by using the transportation card.

If the user holds the mobile phone to approach the bank POS terminal, the mobile phone automatically switches from the screen-off mode to the screen-on mode, and the type information that is of the POS terminal and that is obtained by the mobile phone is a type identifier of a financial industry. For example, a REQA code is "0100110". In this case, the mobile phone finds, based on the type identifier of the financial industry, that a transaction account corresponding to the type identifier is a bank card, and the mobile phone activates the bank card, and subsequently transacts with the POS by using the bank card.

It can be learned from the foregoing that, according to the e-wallet transaction method provided in this application, the user does not need to manually select a transaction account, and the mobile phone can obtain the type information of the electronic device based on the request message sent by the electronic device, and further automatically select a corresponding transaction account based on the type information to make a transaction. In this way, a procedure in which the mobile terminal makes an electronic transaction by using an e-wallet application is simplified, and user experience is improved.

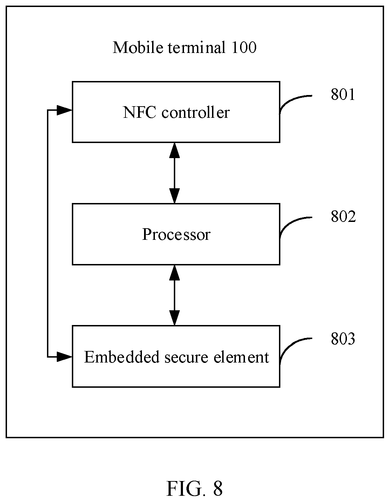

FIG. 8 is a structural composition diagram of a mobile terminal according to this application. The mobile terminal 100 includes an NFC controller 801, a processor 802, and an embedded secure element (embedded Secure Element, eSE) 803.

The NFC controller 801 is configured to receive a radio frequency signal, for example, a request message, sent by a POS terminal, and transfer the signal to the processor 802.

The processor 802 is configured to: parse the received request message, identify a type that is of the POS terminal and that is carried in the request message, and find a card matching the type in the embedded secure element 803.

The embedded secure element 803 is configured to store various types of transaction account information, is configured to activate a corresponding transaction account after receiving a transaction account activation instruction sent by the processor 802, and is further configured to transact with the POS terminal to implement card swiping consumption.

Further, with reference to the mobile terminal shown in FIG. 8, an e-wallet transaction method provided in this application is described. The method specifically includes the following steps. S201: After the mobile terminal approaches an electronic device, the NFC controller of the mobile terminal receives type information of the POS terminal sent by the electronic device.

The type information of the POS terminal includes a type identifier of the POS terminal, and is used to indicate an identifier of an industry to which the POS terminal belongs, for example, a financial industry or a transportation industry.

For example, the POS terminal may periodically send a request message to the mobile terminal, where the request message carries the type identifier of the POS terminal. The type identifier is also referred to as an industry identifier, and is used to indicate the industry to which the POS terminal belongs. The mobile terminal receives the request message by using the NFC controller. The request message may be a REQA. Refer to the descriptions about the REQA in step S101. Details are not described herein.

S202: The NFC controller sends the type information of the POS terminal to the processor. S203: The processor determines, from a plurality of pieces of transaction account information based on the type information of the POS terminal, a transaction account used in a current transaction.

Specifically, the processor searches, based on the type identifier of the POS terminal, for a transaction account corresponding to the type identifier, and uses the found transaction account as the transaction account of the current transaction.

For example, if the type information of the POS terminal indicates that the POS terminal is of a bank type, the mobile terminal determines to use a bank transaction account. If the type information of the POS terminal indicates that the POS terminal is of a transportation type, the mobile terminal determines to use a transportation transaction account.

S204: The processor requests the embedded secure element to activate the transaction account.

In some embodiments, before activating the bank transaction account, the mobile terminal prompts a user to input a fingerprint. After receiving the fingerprint input by the user, the processor verifies the fingerprint. If the verification succeeds, it indicates that the user can use the bank transaction account on the mobile terminal to make a card swiping transaction. If the verification fails, it indicates that the user has no right to use the bank transaction account on the mobile terminal to make a transaction.

The instruction carries an identifier of the transaction account of the current transaction, so that the embedded secure element activates the transaction account when receiving the transaction account activation instruction sent by the processor.

S205: The embedded secure element activates the transaction account, and notifies the processor. S206: The processor requests the NFC controller to activate a card emulation function.

The card emulation function is a working mode in an NFC communication function. After the mode is enabled, the mobile terminal may emulate a physical card to transact with the POS terminal. To be specific, after the card emulation function is enabled in NFC, the POS terminal may directly make an electronic transaction with the embedded secure element.

S207: The NFC controller notifies the POS terminal that the transaction account has been activated. For example, the NFC controller may use an answer to request type A (answer to request Type A, ATQA) in an NFC protocol to notify the POS terminal that the mobile terminal may transact with the POS terminal, so that the POS terminal performs a transaction procedure with the mobile terminal.

S208: The POS terminal and the mobile terminal execute a protocol activation procedure.

The protocol activation procedure may also use the NFC protocol, is used by the POS terminal to establish a communication channel with the mobile terminal, and includes but is not limited to negotiating information such as a packet format and a packet length with the mobile terminal. S209: The POS terminal and the mobile terminal execute the transaction procedure.

The NFC protocol may also be used in the card swiping transaction procedure.

It may be understood that, to implement the foregoing functions, the foregoing mobile terminal and the like include corresponding hardware structures and/or software modules for performing the functions. A person of ordinary skill in the art should easily be aware that, in combination with the units and algorithm steps in the examples described in the embodiments disclosed in this specification, the embodiments of this application can be implemented by hardware or a combination of hardware and computer software. Whether a function is performed by hardware or hardware driven by computer software depends on particular applications and design constraints of the technical solutions. A person skilled in the art may use a different method to implement the described functions for each particular application, but it should not be considered that the implementation goes beyond the scope of the embodiments of this application.

In the embodiments of this application, functional modules of the mobile terminal and the like may be obtained through division based on the foregoing method embodiments. For example, functional modules may be obtained through division in one-to-one correspondence with the functions, or two or more functions may be integrated into one processing module. The integrated module may be implemented in a form of hardware, or may be implemented in a form of a software functional module. It should be noted that, in the embodiments of this application, division into the modules is an example, is merely logical function division, and may be other division in actual implementation.

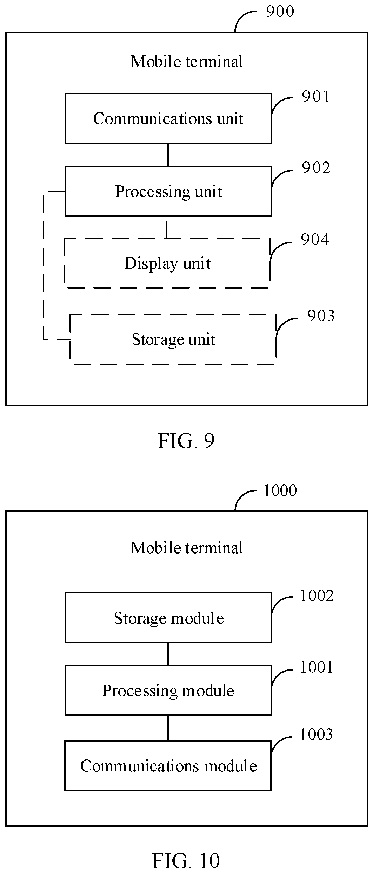

When functional modules are obtained through division in one-to-one correspondence with the functions, FIG. 9 is a possible schematic structural diagram of a mobile terminal in the foregoing embodiment. As shown in FIG. 9, the mobile terminal 900 includes a communications unit 901 and a processing unit 902.

The communications unit 901 is configured to perform interaction between the mobile terminal and another device, for example, configured to support the mobile terminal in receiving a request message sent by an electronic device, support the mobile terminal in sending a response message to the electronic device, support the mobile terminal in performing a protocol activation procedure and a transaction procedure with the electronic device, and/or perform another process of the technology described in this specification. The processing unit 902 is configured to support the mobile terminal in obtaining type information of the electronic device from the received request message, support the mobile terminal in determining, from a plurality of pieces of transaction account information, transaction account information corresponding to the type information of the electronic device, and/or perform another process of the technology described in this specification. All related content of the steps in the foregoing method embodiment may be cited in function descriptions of corresponding function modules. Details are not described herein.

Certainly, the mobile terminal 900 may further include a storage unit 903 configured to store program code, data, and the like. The mobile terminal 900 further includes a display unit 904 configured to display the foregoing terminal interfaces. In addition, functions that the functional units can specifically implement include but are not limited to the functions corresponding to the method steps in the foregoing embodiments. For detailed descriptions of other units of the mobile terminal 900, refer to the detailed descriptions of the method steps corresponding to the units. Details are not described in this embodiment of this application.

When an integrated unit is used, the processing unit 902 may be a processing module of the mobile terminal. The display unit 904 may be a display module, for example, a touchscreen. The communications unit 901 may be a communications module of the mobile terminal, for example, an RF circuit, a Wi-Fi module, or a Bluetooth module. The storage unit 903 may be a storage module of the mobile terminal.

FIG. 10 is a possible schematic structural diagram of a mobile terminal in the foregoing embodiment. The mobile terminal 1000 includes a processing module 1001, a storage module 1002, and a communications module 1003. The processing module 1001 is configured to perform control management on an action of the mobile terminal. The storage module 1002 is configured to store program code and data of the mobile terminal. The communications module 1003 is configured to communicate with another mobile terminal. The processing module 1001 may be a processor or a controller, such as a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof, and may implement or execute various examples of logical blocks, modules, and circuits described with reference to content disclosed in this application. The processor may be a combination for implementing a computing function, for example, a combination including one or more microprocessors, or a combination of a DSP and a microprocessor. The communications module 1003 may be a transceiver, a transceiver circuit, a communications interface, or the like. The storage module 1002 may be a memory.

When the processing module 1001 is a processor (the processor 101 shown in FIG. 2), the communications module 1003 is an RF transceiver circuit (the radio frequency circuit 102 shown in FIG. 2), and the storage module 1002 is a memory (the memory 103 shown in FIG. 2), the mobile terminal provided in this embodiment of this application may be the mobile terminal 100 shown in FIG. 2. The communications module 1003 may include not only an RF circuit, but also a Wi-Fi module and a Bluetooth module. Communications modules such as the RF circuit, the Wi-Fi module, and the Bluetooth module may be collectively referred to as a communications interface. The processor, the communications interface, and the memory may be coupled together by using a bus.

The foregoing descriptions of the implementations allow a person skilled in the art to clearly understand that, for ease and brevity of description, division into the foregoing functional modules is used as an example for illustration. In actual application, the foregoing functions may be allocated to and implemented by different modules depending on a requirement, that is, an inner structure of an apparatus is divided into different functional modules to implement all or some of the functions described above. For detailed working processes of the foregoing system, apparatus, and unit, refer to corresponding processes in the foregoing method embodiments, and details are not described herein.

In the several embodiments provided in this application, it should be understood that the disclosed system, apparatus, and method may be implemented in other manners. For example, the described apparatus embodiment is merely an example. For example, division into the modules or units is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An electronic transaction method, applied to a mobile terminal (100), wherein the mobile terminal includes an embedded secure element (115, 803), which comprises at least two different types of transaction account information, the transaction account information comprises a bank card and a transportation card, each card is characteristic for a card thumbnail, the transaction account information is bound by a user in an e-wallet, and the method comprises:
establishing, by the mobile terminal, a near field communication connection to a transportation POS terminal (200);
receiving, by the mobile terminal, a request message sent by the transportation POS terminal through near field communication, wherein the request message is a request command type A in the Near Field Communication, NFC, protocol and a flag bit in the request message is re-encoded so that the request message comprises type information of the transportation POS terminal, wherein different codes correspond to different types of POS terminals; and
obtaining, by the mobile terminal, the type information of the transportation POS terminal from the request message, and determining, from the at least two different types of transaction account information based on the type information of the transportation POS terminal, transaction account information corresponding to the type information of the transportation POS terminal to achieve a transaction with the transportation POS terminal;
switching the mobile terminal automatically from a screen-off mode to a screen-on mode;
displaying, on the mobile terminal, a payment interface of the transportation card, wherein the payment interface includes a transportation card thumbnail (501) and prompt information (502), the transportation card thumbnail indicates that a transaction account currently used on the mobile terminal is the transportation card, and the prompt information is used to prompt the user to approach the transportation POS terminal for card swiping;
transacting; by the mobile phone, automatically with the transportation POS terminal;
wherein the method further comprises:
establishing, by the mobile terminal, a near field communication connection to a bank POS terminal;
receiving, by the mobile terminal, a further request message sent by the bank POS terminal through near field communication wherein the further request message is a request command type A in the Near Field Communication, NFC, protocol and a flag bit in the further request message is re-encoded so that the further request message comprises type information of the bank POS terminal, and
obtaining, by the mobile terminal, the type information of the bank POS terminal from the further request message, and determining, from the at least two different types of transaction account information based on the type information of the bank POS terminal, transaction account information corresponding to the type information of the bank POS terminal to achieve a transaction with the bank POS terminal;
switching the mobile terminal automatically from a screen-off mode to a screen-on mode,
displaying, on the mobile terminal, a payment interface of the bank card, wherein the payment interface includes a bank card thumbnail (601) and prompt information (602), the bank card thumbnail indicates that a transaction account currently used on the mobile terminal is the bank card, and the prompt information is used to prompt the user to input a fingerprint, so that the mobile phone verifies an identity of the user,
displaying, on the mobile terminal, a further interface comprising the bank card thumbnail (601) and further prompt information (603), wherein the further prompt information is used to notify the user that the fingerprint verification succeeds;
transacting, by the mobile phone, automatically with the bank POS terminal; wherein
the flag bit of the further request message is extended, and different codes are used in an extension of the flag bit to correspond to different types of POS terminals,
eight bits are added to the flag bit of the further request message, so that original seven bits are extended to 15 bits, a content of the original seven bits remains unchanged, and the extension of the flag bit is used to identify a type of the POS terminal, and the added eight bits are encoded by using an encoding rule of an application family identifier.

2. The method according to claim 1, wherein after achieving the transaction with the transportation POS terminal, the method further comprises: screening on and showing, by the mobile terminal, a further interface, wherein the further interface includes the transportation card thumbnail and a further payment information.

3. The method according to claim 2, wherein the further payment information comprises a payment success icon of the transaction with the transportation POS terminal.

4. The method according to claim 2, wherein the further payment information comprises amount of the transportation card.

5. The method according to any one of claims 1 to 4, wherein in an e-wallet on the mobile phone, the bank card thumbnail and the transportation card thumbnail indicate that the e-wallet of the mobile phone has been bound with the account information of the bank card and the account information of the transportation card.

6. The method according to any one of claim 1 to 5, wherein the transaction account information comprises a card for a door control wherein the method further comprises:
establishing, by the mobile terminal, a near field communication connection to a door control;
receiving, by the mobile terminal, a third request message sent by the door control through near field communication, wherein the third request message comprises type information of the door control; and
obtaining, by the mobile terminal, the type information of the door control from the third request message, and determining, from at least three
different types of transaction account information based on the type information of the door control, a door control card transaction account information corresponding to the door control for controlling the door.

7. A mobile terminal (100), comprising a processor (101), a memory (103), and a touchscreen (104) wherein the memory and the touchscreen are coupled to the processor, the memory is configured to store computer program code, the computer program code comprises a computer instruction, and when the processor executes the computer instruction stored in the memory, the mobile terminal performs the electronic transaction method according to any one of claims 1 to 6.

8. A computer storage medium, comprising a computer instruction, wherein when the computer instruction is run on a mobile terminal (100), the mobile terminal is enabled to perform the electronic transaction method according to any one of claims 1 to 6.

9. A computer program product, wherein when the computer program product is run on a computer, the computer is enabled to perform the electronic transaction method according to any one of claims 1 to 6.

## Patentansprüche

1. Elektronisches Transaktionsverfahren, das auf ein mobiles Endgerät (100) angewendet wird, wobei das mobile Endgerät ein eingebettetes sicheres Element (115, 803) umfasst, das mindestens zwei unterschiedliche Typen von Transaktionskontoinformationen umfasst, wobei die Transaktionskontoinformationen eine Bankkarte und eine Beförderungsmittelkarte umfassen, jede Karte für eine Kartenminiaturdarstellung charakteristisch ist, die Transaktionskontoinformationen durch einen Benutzer in einer elektronischen Geldbörse verknüpft sind, und das Verfahren umfasst:
Herstellen, durch das mobile Endgerät, einer Nahfeldkommunikationsverbindung zu einem Beförderungsmittel-POS-Endgerät (200);
Empfangen, durch das mobile Endgerät, einer Anforderungsnachricht, die durch das Beförderungsmittel-POS-Endgerät über Nahfeldkommunikation gesendet wird, wobei die Anforderungsnachricht ein Anforderungsbefehlstyp A in dem Nahfeldkommunikations(NFC)-Protokoll ist, und ein Flag-Bit in der Anforderungsnachricht neu codiert wird, sodass die Anforderungsnachricht Typinformationen des Beförderungsmittel-POS-Endgeräts umfasst, wobei unterschiedliche Codes unterschiedlichen Typen von POS-Endgeräts entsprechen; und
Erhalten, durch das mobile Endgerät, der Typinformationen des Beförderungsmittel-POS-Endgeräts von der Anforderungsnachricht, und Bestimmen, aus den mindestens zwei unterschiedlichen Typen von Transaktionskontoinformationen, basierend auf den Typinformationen des Beförderungsmittel-POS-Endgeräts, von Transaktionskontoinformationen, die den Typinformationen des Beförderungsmittel-POS-Endgeräts entsprechen, um eine Transaktion mit dem Beförderungsmittel-POS-Endgerät zu erreichen;
automatisches Umschalten des mobilen Endgeräts von einem Modus mit ausgeschaltetem Bildschirm in einen Modus mit eingeschaltetem Bildschirm;
Anzeigen, auf dem mobilen Endgerät, einer Zahlungsschnittstelle der Beförderungsmittelkarte, wobei die Zahlungsschnittstelle eine Beförderungsmittelkarten-Miniaturdarstellung (501) und Aufforderungsinformationen (502) einschließt, die Beförderungsmittelkarten-Miniaturdarstellung angibt, dass ein Transaktionskonto, das aktuell auf dem mobilen Endgerät verwendet wird, die Beförderungsmittelkarte ist, und die Aufforderungsinformationen verwendet werden, um den Benutzer aufzufordern, sich dem Beförderungsmittel-POS-Endgerät zum Einlesen der Karte zu nähern;
Transaktionen durchführen; durch das Mobiltelefon, automatisch mit dem Beförderungsmittel-POS-Endgerät;
wobei das Verfahren ferner umfasst:
Herstellen, durch das mobile Endgerät, einer Nahfeldkommunikationsverbindung zu einem Bank-POS-Endgerät;
Empfangen, durch das mobile Endgerät, einer weiteren Anforderungsnachricht, die durch das Bank-POS-Endgerät über Nahfeldkommunikation gesendet wird, wobei die Anforderungsnachricht ein Anforderungsbefehlstyp A in dem Nahfeldkommunikations(NFC)-Protokoll ist, und ein Flag-Bit in der weiteren Anforderungsnachricht neu codiert wird, sodass die Anforderungsnachricht Typinformationen des Bank-POS-Endgeräts umfasst, und
Erhalten, durch das mobile Endgerät, der Typinformationen des Bank-POS-Endgeräts aus der weiteren Anforderungsnachricht und Bestimmen, aus den mindestens zwei unterschiedlichen Typen von Transaktionskontoinformationen, basierend auf den Typinformationen des Bank-POS-Endgeräts, von Transaktionskontoinformationen, die den Typinformationen des Bank-POS-Endgeräts entsprechen, um eine Transaktion mit dem Bank-POS-Endgerät zu erreichen;
automatisches Umschalten des mobilen Endgeräts von einem Modus mit ausgeschaltetem Bildschirm in einen Modus mit eingeschaltetem Bildschirm, Anzeigen, auf dem mobilen Endgerät, einer Zahlungsschnittstelle der Bankkarte, wobei die Zahlungsschnittstelle eine Bankkarten-Miniaturdarstellung (601) und Aufforderungsinformationen (602) einschließt, die Bankkarten-Miniaturdarstellung angibt, dass ein Transaktionskonto, das aktuell auf dem mobilen Endgerät verwendet wird, die Bankkarte ist, und die Aufforderungsinformationen verwendet werden, um den Benutzer aufzufordern, einen Fingerabdruck einzugeben, sodass das Mobiltelefon eine Identität des Benutzers verifiziert,
Anzeigen, auf dem mobilen Endgerät, einer weiteren Schnittstelle, die die Bankkarten-Miniaturdarstellung (601) und weitere Aufforderungsinformationen (603) umfasst,
wobei die weiteren Aufforderungsinformationen verwendet werden, um den Benutzer zu benachrichtigen, dass die Fingerabdruckverifikation erfolgreich ist;
Automatisches Durchführen von Transaktionen, durch das Mobiltelefon mit dem Bank-POS-Endgerät; wobei das Flag-Bit der weiteren Anforderungsnachricht erweitert wird und unterschiedliche Codes in einer Erweiterung des Flag-Bits verwendet werden, um unterschiedlichen Typen von POS-Endgeräten zu entsprechen,
dem Flag-Bit der weiteren Anforderungsnachricht acht Bits hinzugefügt werden, sodass die ursprünglichen sieben Bits auf 15 Bits erweitert werden, ein Inhalt der ursprünglichen sieben Bits unverändert bleibt und die Erweiterung des Flag-Bits verwendet wird, um einen Typ des POS-Endgeräts zu identifizieren, und die hinzugefügten acht Bits durch Verwenden einer Codierungsregel einer Anwendungsfamilienkennung codiert werden.

2. Verfahren nach Anspruch 1, wobei, nach dem Erreichen der Transaktion mit dem Beförderungsmittel-POS-Endgerät, das Verfahren ferner umfasst: Vorführen und Zeigen, durch das mobile Endgerät, einer weiteren Schnittstelle, wobei die weitere Schnittstelle die Beförderungsmittelkarten-Miniaturdarstellung und weitere Zahlungsinformationen einschließt.

3. Verfahren nach Anspruch 2, wobei die weiteren Zahlungsinformationen ein Zahlungserfolgssymbol der Transaktion mit dem Beförderungsmittel-POS-Endgerät umfassen.

4. Verfahren nach Anspruch 2, wobei die weiteren Zahlungsinformationen den Betrag der Beförderungsmittelkarte umfassen.

5. Verfahren nach einem der Ansprüche 1 bis 4, wobei, in einer elektronischen Geldbörse auf dem Mobiltelefon, die Bankkarten-Miniaturdarstellung und die Beförderungsmittelkarten-Miniaturdarstellung angeben, dass die elektronische Geldbörse des Mobiltelefons mit den Kontoinformationen der Bankkarte und den Kontoinformationen der Beförderungsmittelkarte verknüpft wurde.

6. Verfahren nach einem der Ansprüche 1 bis 5, wobei die Transaktionskontoinformationen eine Karte für eine Türsteuerung umfassen, wobei das Verfahren ferner umfasst:
Herstellen, durch das mobile Endgerät, einer Nahfeldkommunikationsverbindung mit einer Türsteuerung;
Empfangen, durch das mobile Endgerät, einer dritten Anforderungsnachricht, die durch die Türsteuerung über Nahfeldkommunikation gesendet wird, wobei die dritte Anforderungsnachricht Typinformationen der Türsteuerung umfasst; und
Erhalten, durch das mobile Endgerät, der Typinformationen der Türsteuerung aus der dritten Anforderungsnachricht, und Bestimmen, aus mindestens drei unterschiedlichen Typen von Transaktionskontoinformationen, basierend auf den Typinformationen der Türsteuerung, von Türsteuerungskartentransaktionskontoinformationen, die der Türsteuerung zum Steuern der Tür entsprechen.

7. Mobiles Endgerät (100), das einen Prozessor (101), einen Speicher (103) und einen Touchscreen (104) umfasst, wobei der Speicher und der Touchscreen mit dem Prozessor gekoppelt sind, der Speicher konfiguriert ist, um Computerprogrammcode zu speichern, der Computerprogrammcode eine Computeranweisung umfasst, und wenn der Prozessor die Computeranweisung ausführt, die in dem Speicher gespeichert ist, das mobile Endgerät das Verfahren nach einem der Ansprüche 1 bis 6 durchführt.

8. Computerspeichermedium, das eine Computeranweisung umfasst, wobei, wenn die Computeranweisung auf einem mobilen Endgerät (100) abläuft, das mobile Endgerät aktiviert wird, um das elektronische Transaktionsverfahren nach einem der Ansprüche 1 bis 6 durchzuführen.

9. Computerprogrammprodukt, wobei, wenn das Computerprogrammprodukt auf einem Computer abläuft, der Computer aktiviert wird, um das elektronische Transaktionsverfahren nach einem der Ansprüche 1 bis 6 durchzuführen.

## Revendications

1. Procédé de transaction électronique, appliqué à un terminal mobile (100), dans lequel le terminal mobile comporte un élément sécurisé intégré (115, 803), qui comprend au moins deux types différents d'informations de compte de transaction, les informations de compte de transaction comprennent une carte bancaire et une carte de transport, chaque carte est caractéristique d'une vignette de carte, les informations de compte de transaction sont liées par un utilisateur dans un portefeuille électronique, et le procédé comprend :
l'établissement, par le terminal mobile, d'une connexion de communication en champ proche avec un terminal PDV de transport (200) ;
la réception, par le terminal mobile, d'un message de demande envoyé par le terminal PDV de transport par le biais d'une communication en champ proche, dans lequel le message de demande est un ordre de demande de type A dans le protocole de communication en champ proche, CCP, et un bit indicateur dans le message de demande est codé de nouveau de sorte que le message de demande comprend des informations de type du terminal PDV de transport, dans lequel différents codes correspondent à différents types de terminaux PDV ; et
l'obtention, par le terminal mobile, des informations de type du terminal PDV de transport à partir du message de demande, et la détermination, à partir des au moins deux types différents d'informations de compte de transaction sur la base des informations de type du terminal PDV de transport, d'informations de compte de transaction correspondant aux informations de type du terminal PDV de transport pour réaliser une transaction avec le terminal PDV de transport ;
la commutation automatique du terminal mobile d'un mode écran éteint à un mode écran allumé ;
l'affichage, sur le terminal mobile, d'une interface de paiement de la carte de transport, dans lequel l'interface de paiement comporte une vignette de carte de transport (501) et des informations d'invite (502), la vignette de carte de transport indique qu'un compte de transaction actuellement utilisé sur le terminal mobile est la carte de transport, et les informations d'invite sont utilisées pour inviter l'utilisateur à s'approcher du terminal PDV de transport pour une lecture de carte ;
la transaction automatique, par le téléphone mobile, avec le terminal PDV de transport ; dans lequel le procédé comprend en outre :
l'établissement, par le terminal mobile, d'une connexion de communication en champ proche avec un terminal PDV bancaire ;
la réception, par le terminal mobile, d'un autre message de demande envoyé par le terminal PDV bancaire par le biais d'une communication en champ proche, dans lequel l'autre message de demande est un ordre de demande de type A dans le protocole de communication en champ proche, CCP, et un bit indicateur dans l'autre message de demande est codé de nouveau de sorte que l'autre message de demande comprend des informations de type du terminal PDV bancaire, et l'obtention, par le terminal mobile, des informations de type du terminal PDV bancaire à partir de l'autre message de demande, et la détermination, à partir des au moins deux types différents d'informations de compte de transaction sur la base des informations de type du terminal PDV bancaire, d'informations de compte de transaction correspondant aux informations de type du terminal PDV bancaire pour réaliser une transaction avec le terminal PDV bancaire ;
la commutation automatique du terminal mobile d'un mode écran éteint à un mode écran allumé,
l'affichage, sur le terminal mobile, d'une interface de paiement de la carte bancaire, dans lequel l'interface de paiement comporte une vignette de carte bancaire (601) et des informations d'invite (602), la vignette de carte bancaire indique qu'un compte de transaction actuellement utilisé sur le terminal mobile est la carte bancaire, et les informations d'invite sont utilisées pour inviter l'utilisateur à saisir une empreinte digitale, de sorte que le téléphone mobile vérifie l'identité de l'utilisateur,
l'affichage, sur le terminal mobile, d'une autre interface comprenant la vignette de carte bancaire (601) et d'autres informations d'invite (603),
dans lequel les autres informations d'invite sont utilisées pour notifier à l'utilisateur que la vérification d'empreinte digitale a réussi ;
la transaction automatique, par le téléphone mobile, avec le terminal PDV bancaire ; dans lequel le bit indicateur de l'autre message de demande est étendu, et différents codes sont utilisés dans une extension du bit indicateur pour correspondre à différents types de terminaux PDV,
huit bits sont ajoutés au bit indicateur de l'autre message de demande, de sorte que sept bits d'origine sont étendus à 15 bits, un contenu des sept bits d'origine reste inchangé, et l'extension du bit indicateur est utilisée pour identifier un type du terminal PDV, et les huit bits ajoutés sont codés en utilisant une règle de codage d'un identifiant de famille d'application.

2. Procédé selon la revendication 1, dans lequel, après avoir réalisé la transaction avec le terminal PDV de transport, le procédé comprend en outre : l'activation et la représentation, par le terminal mobile, d'une autre interface, dans lequel l'autre interface comporte la vignette de carte de transport et d'autres informations de paiement.

3. Procédé selon la revendication 2, dans lequel les autres informations de paiement comprennent une icône de réussite de paiement de la transaction avec le terminal PDV de transport.

4. Procédé selon la revendication 2, dans lequel les autres informations de paiement comprennent un montant de la carte de transport.

5. Procédé selon l'une quelconque des revendications 1 à 4, dans lequel, dans un portefeuille électronique sur le téléphone mobile, la vignette de carte bancaire et la vignette de carte de transport indiquent que le portefeuille électronique du téléphone mobile a été lié aux informations de compte de la carte bancaire et aux informations de compte de la carte de transport.

6. Procédé selon l'une quelconque des revendications 1 à 5, dans lequel les informations de compte de transaction comprennent une carte pour une commande de porte, dans lequel le procédé comprend en outre :
l'établissement, par le terminal mobile, d'une connexion de communication en champ proche avec une commande de porte ;
la réception, par le terminal mobile, d'un troisième message de demande envoyé par la commande de porte par le biais d'une communication en champ proche, dans lequel le troisième message de demande comprend des informations de type de la commande de porte ; et
l'obtention, par le terminal mobile, des informations de type de la commande de porte à partir du troisième message de demande, et la détermination, à partir d'au moins trois types différents d'informations de compte de transaction sur la base des informations de type de la commande de porte, d'informations de compte de transaction de carte de commande de porte correspondant à la commande de porte pour la commande de la porte.

7. Terminal mobile (100), comprenant un processeur (101), une mémoire (103), et un écran tactile (104), dans lequel la mémoire et l'écran tactile sont couplés au processeur, la mémoire est configurée pour stocker un code de programme informatique, le code de programme informatique comprend une instruction informatique, et, lorsque le processeur met en œuvre l'instruction informatique stockée dans la mémoire, le terminal mobile effectue le procédé de transaction électronique selon l'une quelconque des revendications 1 à 6.

8. Support de stockage informatique, comprenant une instruction informatique, dans lequel, lorsque l'instruction informatique est exécutée sur un terminal mobile (100), le terminal mobile est activé pour effectuer le procédé de transaction électronique selon l'une quelconque des revendications 1 à 6.

9. Produit-programme informatique, dans lequel, lorsque le produit-programme informatique est exécuté sur un ordinateur, l'ordinateur est activé pour effectuer le procédé de transaction électronique selon l'une quelconque des revendications 1 à 6.
